# EUROPÄISCHE PATENTSCHRIFT

(11) **EP 0 924 266 B1**
(45) Veröffentlichungstag und Bekanntmachung des Hinweises auf die Patenterteilung: **22.01.2003**
(21) Anmeldenummer: 98811194.4
(22) Anmeldetag: 01.12.1998
(51) Int. Cl.: C09B 67/22, D06P 3/06, C09B 1/34

(54) **Farbstoffmischungen und deren Verwendung**
Mixtures of dyes and their use
Melanges de colorants et leur utilisation

(30) Priorität: 10.12.1997 EP 97810963
(43) Veröffentlichungstag der Anmeldung: 23.06.1999
(73) Patentinhaber: Ciba Specialty Chemicals Holding Inc., 4057 Basel (CH)
(72) Erfinder: Adam, Jean-Marie, 68300 Rosenau (FR)

(56) Entgegenhaltungen:
- EP-A- 0 083 299
- EP-A- 0 230 045
- EP-A- 0 387 201
- EP-A- 0 651 028
- GB-A- 2 236 542
- CHEMICAL ABSTRACTS, vol. 100, no. 6, 6. Februar 1984 Columbus, Ohio, US; abstract no. 35774r, XP002063337 & JP 58 125758 A (SUMITOMO CHEMICAL CO)

## Beschreibung

Die vorliegende Erfindung betrifft Mischungen blaufärbender Anthrachinon-Farbstoffe, die zum Färben von natürlichen oder synthetischen textilen Polyamidfasermaterialien aus wässrigem Bad geeignet sind, die sehr gute Echtheitseigenschaften, insbesondere in der Lichtechtheit, aufweisen und die insbesondere in Kombination mit anderen Farbstoffen ein gutes Ziehverhalten, insbesondere aus Kurzflotten, zeigen.

Die vorliegende Erfindung betrifft ferner ein Verfahren zum Trichromie-Färben oder -Bedrucken von natürlichen und synthetischen Polyamidfasermaterialien unter Verwendung dieser Mischungen blaufärbender Anthrachinon-Farbstoffe. Die so erhaltenen Färbungen zeichnen sich insbesondere durch einen gleichmässigen Farbaufbau bei gleichzeitiger Nuancenkonstanz in verschiedenen Konzentrationen aus.

Gegenstand der vorliegenden Erfindung sind somit Farbstoffmischungen, dadurch gekennzeichnet, dass sie mindestens einen Farbstoff der Formel (1) 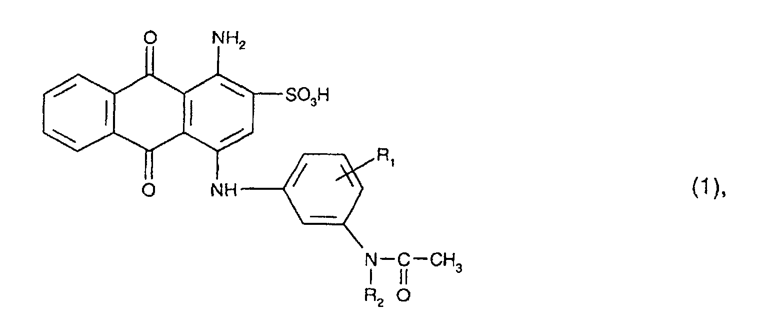 worin
R₁ Wasserstoff, C₁-C₄-Alkyl oder C₁-C₄-Alkoxy und
R₂ Wasserstoff oder C₁-C₄-Alkyl ist
zusammen mit mindestens einem Farbstoff der Formel (2) 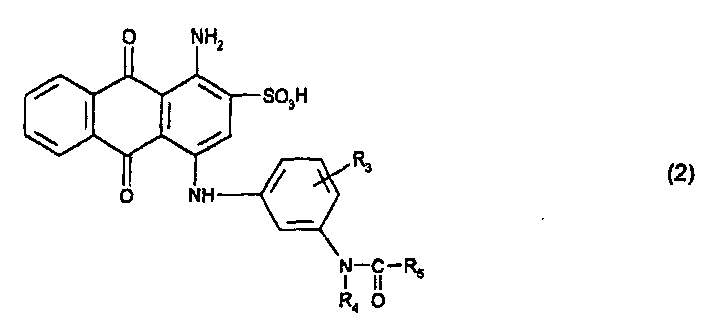 enthalten, worin
R₃ Wasserstoff, C₁-C₄-Alkyl oder C₁-C₄-Alkoxy bedeutet,
R₄ Wasserstoff und
R₅ gegebenenfalls durch Sauerstoff unterbrochenes C₂-C₆-Alkyl ist, mit der Massgabe, dass R₁ nicht Methyl bedeutet, falls R₂, R₃ und R₄ Wasserstoff sind und R₅ Ethyl ist.

Als C₁-C₄-Alkyl kommen für R₁, R₂, und R₃ unabhängig voneinander z.B. Methyl, Ethyl, Propyl, Isopropyl, Butyl, sek.-Butyl, tert.-Butyl oder Isobutyl, insbesondere Methyl oder Ethyl und vorzugsweise Methyl, in Betracht.

Als C₁-C₄-Alkoxy kommen für R₁ und R₃ unabhängig voneinander z.B. Methoxy, Ethoxy, Propoxy, lsopropoxy, Butoxy oder lsobutoxy, Insbesondere Methoxy oder Ethoxy und vorzugsweise Methoxy, in Betracht.

Als C₂-C₆-Alkyl kommen für R₅ z.B. Ethyl, Propyl, Isopropyl, Butyl, sek.-Butyl, tert.-Butyl, Isobutyl, Pentyl oder Hexyl in Betracht. Die genannten Alkylreste können durch Sauerstoff unterbrochen sein. Stellvertretend für solche durch Sauerstoff unterbrochenen Alkylreste seien der Methoxymethyl-, Ethoxymethyl- und der 2-Methoxyethylrest und insbesondere der Methoxymethylrest genannt.

R₁ bedeutet bevorzugt Wasserstoff, Methyl oder Methoxy und insbesondere Wasserstoff.

R₂ bedeutet bevorzugt Wasserstoff, Methyl oder Ethyl und insbesondere Wasserstoff.

R₃ bedeutet bevorzugt Wasserstoff, Methyl oder Methoxy und insbesondere Wasserstoff.

R₅ bedeutet bevorzugt C₂-C₄-Alkyl, insbesondere Propyl oder Ethyl und vorzugswelse Ethyl.

Bevorzugt sind Farbstoffmischungen, worin
R₁ und R₃ unabhängig voneinander Wasserstoff, Methyl oder Methoxy sind,
R₂ und R₄ Wasserstoff bedeuten und
R₅ C₂-C₄-Alkyl ist.

Besonders bevorzugt sind Farbstoffmischungen, worin
R₁, R₂, R₃ und R₄ Wasserstoff sind und
R₅ Ethyl bedeutet.

Die erfindungsgemässen Farbstoffmischungen enthalten bevorzugt 5 bis 95 Gew.%, insbesondere 20 bis 80 Gew.% und vorzugsweise 40 bis 60 Gew.% eines Farbstoffs der Formel (1), bezogen auf die Gesamtmenge der Farbstoffe der Formeln (1) und (2).

Die Anthrachinonfarbstoffe der Formeln (1) und (2) sind bekannt oder können in Analogie zu bekannten Farbstoffen hergestellt werden. So können die Farbstoffe der Formeln (1) und (2) z.B. erhalten werden, indem man 1-Amino-4-bromanthrachinon-2-sulfonsäure mit einer Verbindung der Formel (11) oder (12) 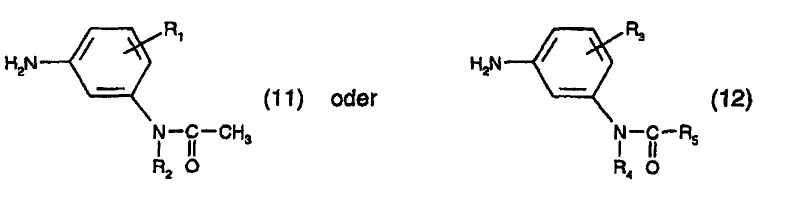 umsetzt, wobei R₁, R₂, R₃, R₄ und R₅ die oben angegebenen Bedeutungen haben. Die Umsetzung erfolgt vorzugsweise in wässriger Lösung bei einer Temperatur von z.B. 50 bis 100°C, insbesondere 65 bis 85°C, in Gegenwart einer Base, wie beispielsweise Natriumhydrogencarbonat, und einem Katalysator, wie beispielsweise einer Mischung aus Kupfer und Kupferchlorid.

Die erfindungsgemässen Farbstoffmischungen können z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Weiterhin können die erfindungsgemässen Farbstoffmischungen durch Mischsynthese hergestellt werden, beispielsweise durch gleichzeitige Umsetzung von 1-Amino-4-bromanthrachinon-2-sulfonsäure mit einer Verbindung der Formel (11) und einer Verbindung der Formel (12) in der oben angegebenen Weise.

Gegenstand der Erfindung ist ferner ein Verfahren zum Färben und Bedrucken von natürlichen oder synthetischen Polyamidfasermaterialien mit der erfindungsgemässen Farbstoffmischung, die mindestens einen Farbstoff der Formel (1) und mindestens einen Farbstoff der Formel (2) enthält. Als synthetische Polyamidfasermaterialien kommen z.B. Polyamid 6,6-oder Polyamid 6-Fasermaterialien in Betracht und als natürliche Polyamidfasermaterialien z.B. Wolle. Zum Färben und Bedrucken werden dabei die üblichen Färbe- bzw. Druckverfahren angewendet.

Das zu färbende oder zu bedruckende Textilmaterial kann in verschiedenen Verarbeitungsformen vorliegen, wie z.B. als Faser, Garn, Gewebe oder Gewirke und insbesondere in Form von Teppichen.

Die erfindungsgemässen Farbstoffmischungen sind auch zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffmischungen zeichnen sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen sowie gleichmässiges gutes Ziehverhalten auf unterschiedlichen Fasermaterialien aus.

Die mit den erfindungsgemässen Farbstoffmischungen nach dem erfindungsgemässen Verfahren hergestellten Färbungen oder Drucke zeichnen sich durch gute Allgemeinechtheiten, insbesondere guter Reib-, Nass-, Nassreib- und Lichtechtheit und ganz besonders einer guten Ozonechtheit aus.

In den erfindungsgemässen Farbstoffmischungen liegen die Farbstoffe der Formeln (1) und (2) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischungen enthalten in der Regel weitere Zusätze, wie z.B. Kochsalz, Dispergatoren oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffmischungen eignen sich besonders zum Färben und Bedrucken in Kombination mit anderen Farbstoffen und insbesondere zum Färben und Bedrucken nach dem Trichromie-Prinzip. Unter Trichromie ist dabei die additive Farbmischung passend gewählter gelb- oder orange-, rot- und blaufärbender Farbstoffe in den zur Erzielung der gewünschten Nuance notwendigen Mengen zu verstehen.

Gegenstand der Erfindung ist ferner ein Verfahren zum Trichromie-Färben oder -Bedrucken von natürlichen oder synthetischen Polyamidfasermaterialien mit den erfindungsgemässen Mischungen aus mindestens einem Farbstoff der Formel (1) und mindestens einem Farbstoff der Formel (2), zusammen mit mindestens einem rotfärbenden Farbstoff und mindestens einem gelb- oder orangefärbenden Farbstoff, wobei für die erfindungsgemässen Mischungen aus mindestens einem Farbstoff der Formel (1) und mindestens einem Farbstoff der Formel (2) insbesondere die zuvor angegebenen Bevorzugungen gelten.

Bevorzugt verwendet man als rotfärbenden Farbstoff in dem erfindungsgemässen Verfahren zum Trichromie-Färben oder -Bedrucken mindestens einen Farbstoff der Formel (3) 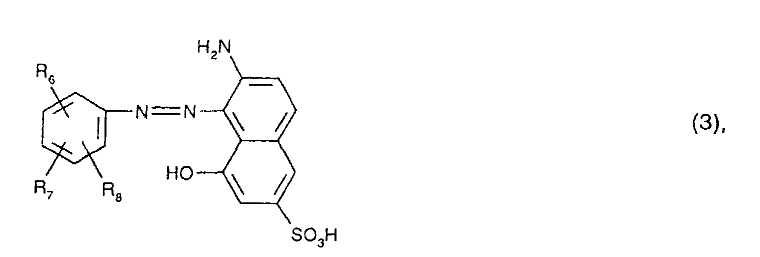 worin
R₆ Wasserstoff, Halogen, gegebenenfalls substituiertes C₁-C₈-Alkyl, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylamino, gegebenenfalls im Phenylring durch Halogen substituiertes Benzoylamino oder 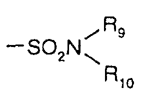 bedeutet, wobei R₉ C₁-C₈-Alkyl oder gegebenenfalls durch C₁-C₄-Alkyl substituiertes Phenyl oder Cyclohexyl und R₁₀ Wasserstoff oder C₁-C₈-Alkyl ist, oder die Reste R₉ und R₁₀ zusammen mit dem sie verbindenden Stickstoffatom einen Azepinylring bilden,
R₇ Wasserstoff, Halogen, C₁-C₈-Alkyl oder C₂-C₄-Alkanoylamino und
R₈ Wasserstoff, Halogen oder gegebenenfalls substituiertes Phenoxy bedeutet.

R₆, R₇ und R₈ als Halogen bedeuten unabhängig voneinander z.B. Fluor, Chlor oder Brom und vorzugsweise Chlor oder Brom.

Als C₁-C₈-Alkyl kommen für R₆, R₇, R₉ und R₁₀ unabhängig voneinander z.B. Methyl, Ethyl, Propyl, Isopropyl, Butyl, Isobutyl, sek.-Butyl, tert.-Butyl, Pentyl, Hexyl, Heptyl oder Octyl in Betracht. R₆ als C₁-C₈-Alkyl kann substituiert sein beispielsweise durch Halogen, wie z.B. Chlor oder Fluor und insbesondere Fluor. Als Beispiel sei der Trifluormethylrest genannt.

Als C₂-C₄-Alkanoylamino kommen für R₆ und R₇ unabhängig voneinander z.B. Acetylamino, Propionylamino oder Butyrylamino in Betracht.

Der Rest R₈ als Phenoxy ist unsubstituiert oder beispielsweise im Phenylring durch C₁-C₄-Alkyl, wie z.B. Methyl oder Ethyl; C₁-C₄-Alkoxy, wie z.B. Methoxy oder Ethoxy; C₂-C₄-Alkanoylamino, wie z.B. Acetylamino oder Propionylamino; Hydroxy; Sulfo oder Halogen, wie z.B. Fluor, Chlor oder Brom, substituiert.

Besonders bevorzugt verwendet man als roffärbenden Farbstoff in dem erfindungsgemässen Verfahren zum Trichromie-Färben oder -Bedrucken mindestens einen Farbstoff der Formel (3), worin
R₆ Halogen, gegebenenfalls durch Halogen substituiertes C₁-C₄-Alkyl, vorzugsweise Trifluormethyl, oder 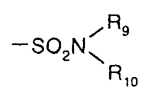 bedeutet, wobei R₉ C₁-C₄-Alkyl, Phenyl oder Cyclohexyl, vorzugsweise Cyclohexyl, und R₁₀ Wasserstoff oder C₁-C₄-Alkyl und vorzugsweise Methyl oder Ethyl und insbesondere Methyl ist, oder die Reste R₉ und R₁₀ zusammen mit dem sie verbindenden Stickstoffatom einen Azepinylring bilden,
R₇ Wasserstoff, Halogen oder C₂-C₄-Alkanoylamino, vorzugsweise Wasserstoff oder Halogen, und
R₈ Wasserstoff, Halogen oder gegebenenfalls im Phenylring durch Halogen, C₁-C₄-Alkyl, C₁-C₄-Alkoxy oder C₂-C₄-Alkanoylamino substituiertes Phenoxy, vorzugsweise Wasserstoff oder gegebenenfalls im Phenylring durch Halogen substituiertes Phenoxy, bedeutet.

Ganz besonders bevorzugt verwendet in dem erfindungsgemässen Verfahren zum Trichromie-Färben oder -Bedrucken als rotfärbenden Farbstoff der Formel (3) einen Farbstoff der Formel (4) 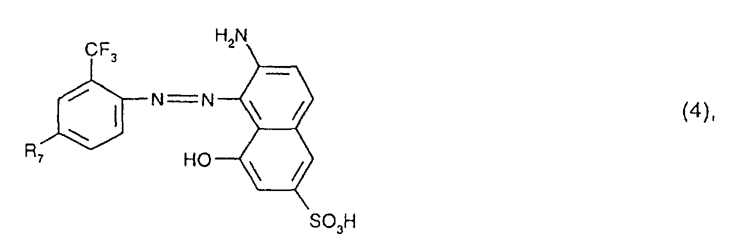 worin
R₇ Wasserstoff oder Halogen bedeutet.

Bevorzugt verwendet man als gelb- oder orangefärbenden Farbstoff in dem erfindungsgemässen Verfahren zum Trichromie-Färben oder -Bedrucken mindestens einen Farbstoff der Formeln (5) oder (6) 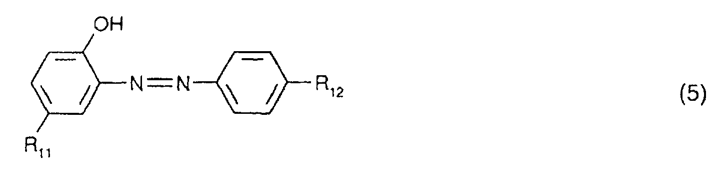 oder 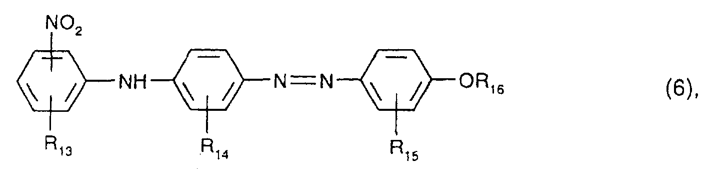 worin
R₁₁ Wasserstoff, C₁-C₄-Alkyl oder gegebenenfalls substituiertes Phenyl und
R₁₂ gegebenenfalls im Alkylteil substituiertes C₁-C₄-Alkoxy oder einen 4,6-disubstituierten N-(1,3,5-triazin-2-yl)amino- oder N-C₁-C₄-Alkyl-N-(1,3,5-triazin-2-yl)aminorest bedeutet,
R₁₃, R₁₄ und R₁₅ unabhängig voneinander Wasserstoff, C₁-C₄-Alkyl, C₁-C₄-Alkoxy, C₂-C₄-Alkanoylamino, Halogen oder Sulfo bedeuten, und
R₁₆ Wasserstoff, C₁-C₄-Alkyl oder gegebenenfalls im Phenylring substituiertes Phenylsulfonyl ist.

Der Rest R₁₁ als Phenyl ist unsubstituiert oder beispielsweise durch C₁-C₄-Alkyl, wie z.B. Methyl oder Ethyl; C₁-C₄-Alkoxy, wie z.B. Methoxy oder Ethoxy; C₂-C₄-Alkanoylamino, wie z.B. Acetylamino oder Propionylamino; Hydroxy; Sulfo oder Halogen, wie z.B. Fluor, Chlor oder Brom, substituiert.

Als N-(1,3,5-triazin-2-yl)amino oder N-C₁-C₄-Alkyl-N-(1,3,5-triazin-2-yl)amino kommen für R₁₂ die in 4- und in 6-Position des Triazinrings unabhängig voneinander beispielsweise durch Halogen, wie z.B. Fluor oder Chlor; Hydroxy; C₁-C₄-Alkoxy, wie z.B. Methoxy oder Ethoxy; C₁-C₄-Alkylthio, wie z.B. Thiomethyl oder Thioethyl; Amino; unsubstituiertes oder im Alkylteil durch Hydroxy, Sulfo, Sulfato, Carboxy, C₂-C₄-Alkanoylamino oder C₁-C₄-Alkoxy substituiertes N-Mono- oder N,N-Di-C₁-C₄-Alkylamino, wie z.B. Methylamino, Ethylamino, 2-Hydroxyethylamino, 2-Methoxyethylamino, N-Methyl-N-(2-Sulfoethyl)amino, Dimethylamino oder Diethylamino; unsubstituiertes oder im Cycloalkylring durch C₁-C₄-Alkyl substituiertes C₅-C₇-Cycloalkylamino, wie z.B. Cyclohexylamino; unsubstituiertes oder im Phenylring durch C₁-C₄-Alkyl, C₁-C₄-Alkoxy, Carboxy, C₂-C₄-Alkanoylamino, Sulfo oder Halogen substituiertes Phenylamino oder N-C₁-C₄-Alkyl-N-phenylamino; Morpholino oder Piperidin-1-yl substituierten Reste in Betracht.

Als C₁-C₄-Alkyl kommen für R₁₁, R₁₃, R₁₄, R₁₅ und R₁₆ unabhängig voneinander z.B. Methyl, Ethyl, Propyl, Isopropyl, n-Butyl, Isobutyl, sek.-Butyl oder tert.-Butyl in Betracht.

Als C₁-C₄-Alkoxy kommen für R₁₂, R₁₃, R₁₄ und R₁₅ unabhängig voneinander z.B. Methoxy, Ethoxy, Propoxy, lsopropoxy, n-Butoxy, lsobutoxy, sek.-Butoxy oder tert.-Butoxy in Betracht. Der Rest R₁₂ als C₁-C₄-Alkoxy kann im Alkylteil z.B. durch Halogen, wie z.B. Fluor, Chlor oder Brom; Hydroxy; C₁-C₄-Alkoxy, wie z.B. Methoxy oder Ethoxy; Amino; N-Mono-C₁-C₄-Alkylamino, wie z.B. Methylamino oder Ethylamino; N,N-Di-C₁-C₄-Alkylamino, wie z.B. Dimethylamino oder Diethylamino; C₂-C₄-Alkanoylamino, wie z.B. Acetylamino oder Propionylamino; Carboxy; Sulfo oder Sulfato substituiert sein. Bevorzugt für R₁₂ als C₁-C₄-Alkoxy sind die im Alkylteil substituierten Reste und insbesondere die im Alkylteil durch Sulfato substituierten Reste.

Als C₂-C₄-Alkanoylamino kommen für R₁₃, R₁₄ und R₁₅ unabhängig voneinander z.B. Acetylamino, Propionylamino oder Butyrylamino in Betracht.

Der Rest R₁₆ als Phenylsulfonyl ist unsubstituiert oder beispielsweise im Phenylring durch C₁-C₄-Alkyl, wie z.B. Methyl oder Ethyl; C₁-C₄-Alkoxy, wie z.B. Methoxy oder Ethoxy; C₂-C₄-Alkanoylamino, wie z.B. Acetylamino oder Propionylamino; Hydroxy; Sulfo oder Halogen, wie z.B. Fluor, Chlor oder Brom, substituiert.

Besonders bevorzugt verwendet man als gelb- oder orangefärbenden Farbstoff in dem erfindungsgemässen Verfahren zum Trichromie-Färben oder -Bedrucken mindestens einen Farbstoff der Formeln (5) oder (6), worin
R₁₁ Wasserstoff, C₁-C₄-Alkyl oder gegebenenfalls durch C₁-C₄-Alkyl, C₁-C₄-Alkoxy oder Halogen substituiertes Phenyl ist,
R₁₂ gegebenfalls im Alkylteil durch Hydroxy oder Sulfato substituiertes C₁-C₄-Alkoxy oder einen Rest der Formel 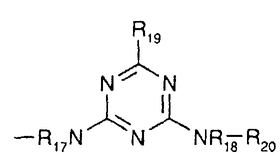 bedeutet, wobei R₁₇ und R₁₈ unabhängig voneinander Wasserstoff oder C₁-C₄-Alkyl sind, R₁₉ C₁-C₄-Alkoxy, Hydroxy, Halogen, Amino, N-Mono- oder N,N-Di-C₁-C₄-Alkylamino und R₂₀ gegebenenfalls durch Hydroxy, C₁-C₄-Alkoxy, C₂-C₄-Alkanoylamino, Carboxy oder Sulfo substituiertes C₁-C₄-Alkyl oder gegebenenfalls durch Halogen, C₁-C₄-Alkyl, C₁-C₄-Alkoxy, C₂-C₄-Alkanoylamino oder Sulfo substituiertes Phenyl bedeutet;
R₁₃ und R₁₄ unabhängig voneinander Wasserstoff oder Sulfo bedeuten,
R₁₅ Wasserstoff, C₁-C₄-Alkyl oder C₁-C₄-Alkoxy und
R₁₆ Wasserstoff oder C₁-C₄-Alkyl ist.

Als C₁-C₄-Alkyl kommen für R₁₇, R₁₈ und R₂₀ unabhängig voneinander z.B. Methyl, Ethyl, Propyl, Isopropyl, n-Butyl, Isobutyl, sek.-Butyl oder tert.-Butyl und vorzugsweise Methyl oder Ethyl in Betracht. R₁₇ und R₁₈ als C₁-C₄-Alkyl sind besonders bevorzugt Methyl. Der Rest R₂₀ als C₁-C₄-Alkyl kann z.B. durch Hydroxy; C₁-C₄-Alkoxy, wie z.B. Methoxy oder Ethoxy; C₂-C₄-Alkanoylamino, wie z.B. Acetylamino oder Propionylamino; Carboxy; Sulfo oder Sulfato substituiert sein. Bevorzugt für R₂₀ als C₁-C₄-Alkyl sind die substituierten Reste und insbesondere der durch Sulfo substituierte Rest.

Als C₁-C₄-Alkoxy kommt für R₁₉ z.B. Methoxy, Ethoxy, Propoxy, lsopropoxy, n-Butoxy, Isobutoxy, sek.-Butoxy oder tert.-Butoxy und vorzugsweise Methoxy oder Ethoxy in Betracht.

Als N-Mono- oder N,N-Di-C₁-C₄-Alkylamino kommt für R₁₉ beispielsweise Methylamino, Ethylamino, Dimethylamino oder Diethylamino in Betracht.

Der Rest R₂₀ als Phenyl ist unsubstituiert oder beispielsweise durch Halogen, wie z.B. Fluor, Chlor oder Brom; C₁-C₄-Alkyl, wie z.B. Methyl oder Ethyl; C₁-C₄-Alkoxy, wie z.B. Methoxy oder Ethoxy; C₂-C₄-Alkanoylamino, wie z.B. Acetylamino oder Propionylamino oder Sulfo substituiert. Bevorzugt für R₂₀ als Phenyl sind die substituierten Reste und insbesondere der Sulfophenylrest.

In einer ganz besonders bevorzugten Ausführungsform des erfindungsgemässen Verfahrens zum Trichromie-Färben oder -Bedrucken verwendet man als gelb- oder orangefärbenden Farbstoff mindestens einen Farbstoff der Formel (5), worin
R₁₁ Wasserstoff, C₁-C₄-Alkyl oder Phenyl, insbesondere Methyl oder Phenyl ist,
R₁₂ im Alkylteil durch Sulfato substituiertes C₁-C₄-Alkoxy, insbesondere 2-Sulfatoethoxy, oder einen Rest der Formel 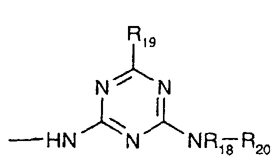 bedeutet, wobei R₁₈ C₁-C₄-Alkyl, insbesondere Methyl, R₁₉ C₁-C₄-Alkoxy, insbesondere Methoxy und R₂₀ durch Sulfo substituiertes C₁-C₄-Alkyl, insbesondere 2-Sulfoethyl sind.

In einer weiteren ganz besonders bevorzugten Ausführungsform des erfindungsgemässen Verfahrens zum Trichromie-Färben oder -Bedrucken verwendet man als gelb- oder orangefärbenden Farbstoff der Formel (6) mindestens einen Farbstoff der Formeln (7) und (8) 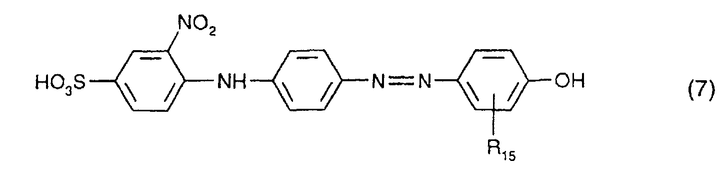 und 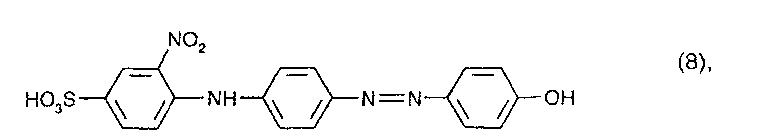 worin
R₁₅ C₁-C₄-Alkyl und insbesondere Methyl ist, vorzugsweise
eine Farbstoffmischung aus mindestens einem Farbstoff der Formel (7) und einem Farbstoff der Formel (8) und insbesondere eine Farbstoffmischung aus einem Farbstoff der Formel (7), worin R₁₅ in ortho-Position zur Azogruppe gebunden ist und Methyl bedeutet, und einem Farbstoff der Formel (8)

Eine bevorzugte Ausführungsform des erfindungsgemässen Verfahrens zum Trichromie-Färben oder -Bedrucken ist dadurch gekennzeichnet, dass man als rotfärbenden Farbstoff mindestens einen Farbstoff der Formel (3), worin
R₆ Halogen, Trifluormethyl oder 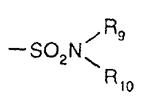 bedeutet, wobei R₉ Cyclohexyl und R₁₀ Methyl ist,
R₇ Wasserstoff oder Halogen und
R₈ Wasserstoff oder durch Halogen substituiertes Phenoxy bedeutet;
als gelb- oder orangefärbende Farbstoffe mindestens einen Farbstoff der Formel (5), worin
R₁₁ Wasserstoff, C₁-C₄-Alkyl oder Phenyl, insbesondere Methyl oder Phenyl ist,
R₁₂ im Alkylteil durch Sulfato substituiertes C₁-C₄-Alkoxy, insbesondere 2-Sulfatoethoxy, oder einen Rest der Formel 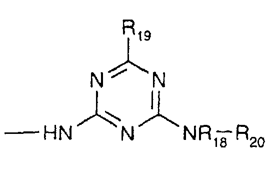 bedeutet, wobei R₁₈ C₁-C₄-Alkyl, insbesondere Methyl, R₁₉ C₁-C₄-Alkoxy, insbesondere Methoxy und R₂₀ durch Sulfo substituiertes C₁-C₄-Alkyl, insbesondere 2-Sulfoethyl sind, oder mindestens einem Farbstoff der Formeln (7) und (8), worin
R₁₅ C₁-C₄-Alkyl und insbesondere Methyl ist; und
eine Farbstoffmischung aus einem Farbstoff der Formel (1) zusammen mit einem Farbstoff der Formel (2) verwendet, worin
R₁, R₂, R₃ und R₄ Wasserstoff sind und
R₅ C₂-C₄-Alkyl und insbesondere Ethyl bedeutet.

Eine besonders bevorzugte Ausführungsform des erfindungsgemässen Verfahrens zum Trichromie-Färben oder -Bedrucken ist dadurch gekennzeichnet, dass man
als roffärbenden Farbstoff einen Farbstoff der Formel (4), worin
R₇ Wasserstoff oder Halogen und
als gelb- oder orangefärbende Farbstoffe eine Farbstoffmischung aus einem Farbstoff der Formel (7), worin
R₁₅ in ortho-Position zur Azogruppe gebunden ist und Methyl bedeutet,
und einem Farbstoff der Formel (8); und
eine Farbstoffmischung aus einem Farbstoff der Formel (1) zusammen mit einem Farbstoff der Formel (2) verwendet, worin
R₁, R₂, R₃ und R₄ Wasserstoff sind und
R₅ Ethyl bedeutet.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kaliumoder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,01 bis 10 Gew.-%, bezogen auf das Färbegut bzw. die Druckpaste, als vorteilhaft erwiesen.

Vorzugsweise färbt man bei einem pH-Wert von 3 bis 7, insbesondere 4 bis 7. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass-, Nassreib- und Lichtechtheit erhalten.

Gegenstand der vorliegenden Erfindung sind ferner konzentrierte wässrige Farbstofflösungen, dadurch gekennzeichnet, dass sie 5 bis 50 Gew.-%, insbesondere 10 bis 50 Gew.-% und vorzugsweise 20 bis 50 Gew.-%, bezogen auf das Gesamtgewicht der Farbstofflösung, einer Farbstoffmischung aus mindestens einem Farbstoff der Formel (1) zusammen mit mindestens einem Farbstoff der Formel (2) enthalten, wobei für die Reste R₁, R₂, R₃, R₄ und R₅ die oben genannten Bedeutungen und Bevorzugungen gelten.

Die erfindungsgemässen konzentrierten wässrigen Farbstofflösungen können weitere Zusätze, wie z.B. Harnstoff, N-Methylpyrrolidon, Caprolactam oder Polyethylenglykol, enthalten. Ferner können die erfindungsgemässen konzentrierten wässrigen Lösungen noch Pilzund/oder Bakterienwachstum hemmende Stoffe enthalten.

Die erfindungsgemässen Farbstofflösungen weisen eine gute Lagerbeständigkeit auf und sind beispielsweise bei einer Temperatur von -5 bis +40°C mehrere Monate lagerstabil.

Die erfindungsgemässen Farbstofflösungen weisen ferner eine gute Hartwasserbeständigkeit auf und sie lassen sich mit Wasser in beliebigem Verhältnis verdünnen, etwa bei der Herstellung der Färbeflotte, ohne das die gelösten Farbstoffe ausfallen.

In der EP-A-0 230 045 sind Farbstoffmischungen beschrieben, die sich von den erfindungsgemässen Farbstoffmischungen durch zwei Strukturmerkmale unterscheiden. Gegenüber der in JP 58-125755 offenbarten Farbstoffmischung sind die erfindungsgemässen Farbstoffmischungen hinsichtlich der Ozonechtheit überlegen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zur Herstellung der Farbstoffmischungen, die einen der Farbstoffe, die in Form der freien Säure den Verbindungen der Formeln (101) und (102) 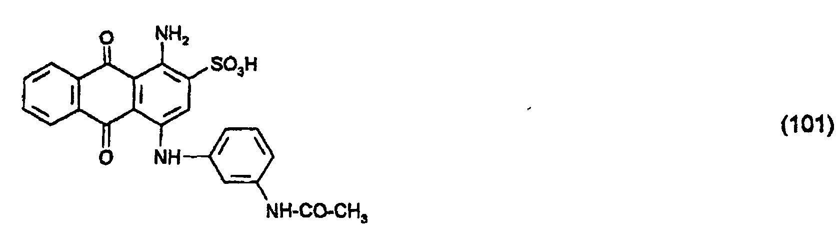 und 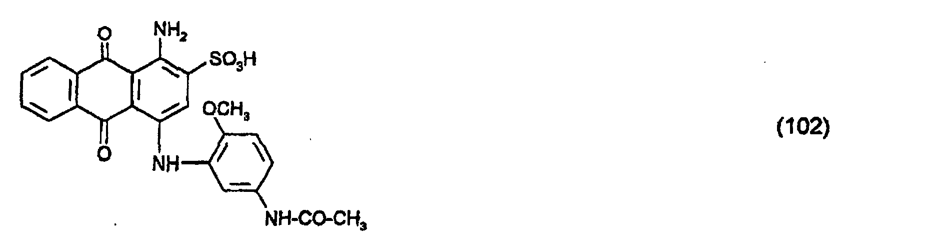 entsprechen und einen Farbstoff, der in Form der freien Säure der Verbindung der Formel (103) 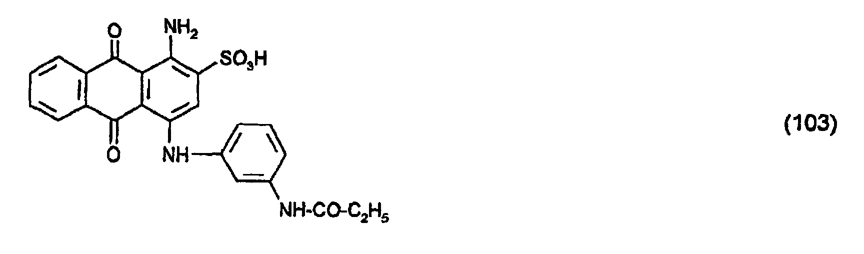 entspricht, enthalten, werden in einem Mixer
a) 50 Teile des Farbstoffs der Formel (101) und 50 Teile des Farbstoffs der Formel (103) homogen gemischt und ergeben 100 Teile der Mischung, die nachfolgend als Farbstoffmischung A bezeichnet wird;
b) 50 Teile des Farbstoffs der Formel (102) und 50 Teile des Farbstoffs der Formel (103) homogen gemischt und ergeben 100 Teile der Mischung, die nachfolgend als Farbstoffmischung B bezeichnet wird;

Beispiel 2: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Ethylenoxid) gegeben. Anschliessend wird das Bad mit 4 Teilen Natriumdihydrogenphosphat und 0,6 Teilen Dinatriumhydrogenphosphat auf einen pH-Wert von 6 gestellt. Dann gibt man eine Mischung von
0,11 Teilen eines Farbstoffs, der in Form der freien Säure der Verbindung der Formel 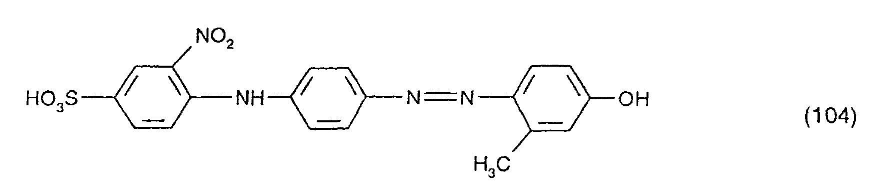 entspricht,
0,11 Teilen eines Farbstoffs, der in Form der freien Säure der Verbindung der Formel 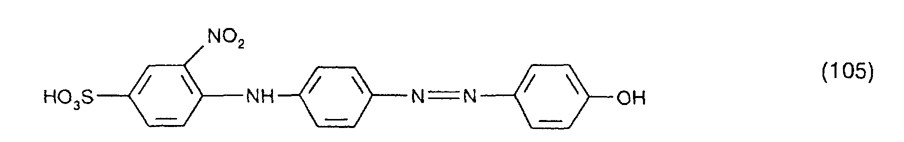 entspricht,
0,1 Teilen eines Farbstoffs, der in Form der freien Säure der Verbindung der Formel 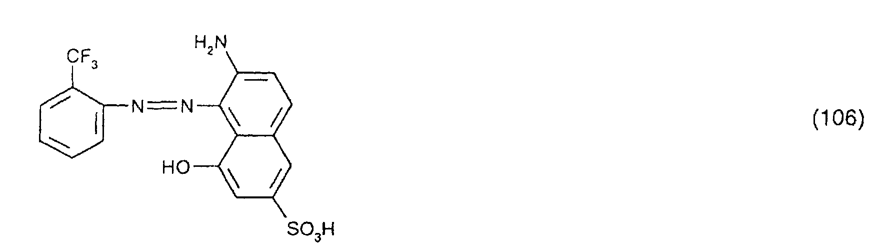 entspricht, und
0,11 Teile der Farbstoffmischung A zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

Beispiel 3: Verfährt man wie in Beispiel 2 angegeben, verwendet jedoch anstelle von 0,11 Teilen der Farbstoffmischung A 0,11 Teile der Farbstoffmischung B, so erhält man ebenfalls in einem beige-braunem Farbton gefärbtes Polyamidgewebe.

Beispiele 4 und 5: Verfährt man wie in Beispiel 2 angegeben, verwendet jedoch anstelle von 0,1 Teilen des rotfärbenden Farbstoffs der Formel (106) 0,1 Teile einer Farbstoffmischung aus 20 Teilen eines Farbstoffs, der in Form der freien Säure der Verbindung der Formel (107) 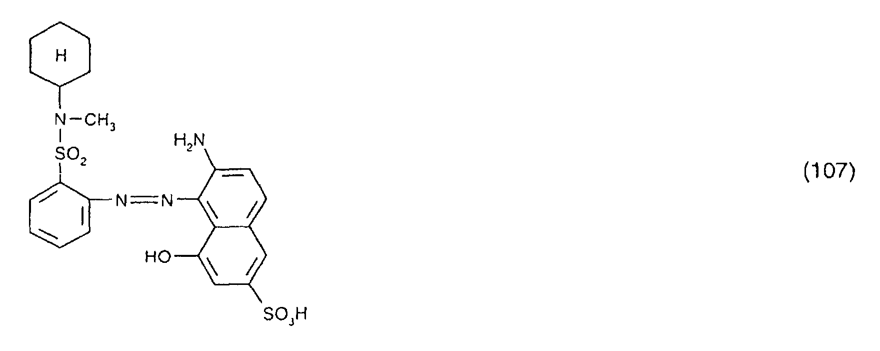 entspricht und jeweils 80 Teile eines Farbstoffs, der in Form der freien Säure den Verbindungen der in Tabelle 1 angegebenen Formeln entspricht, so erhält man ebenfalls in einem beige-braunem Farbton gefärbtes Polyamidgewebe.

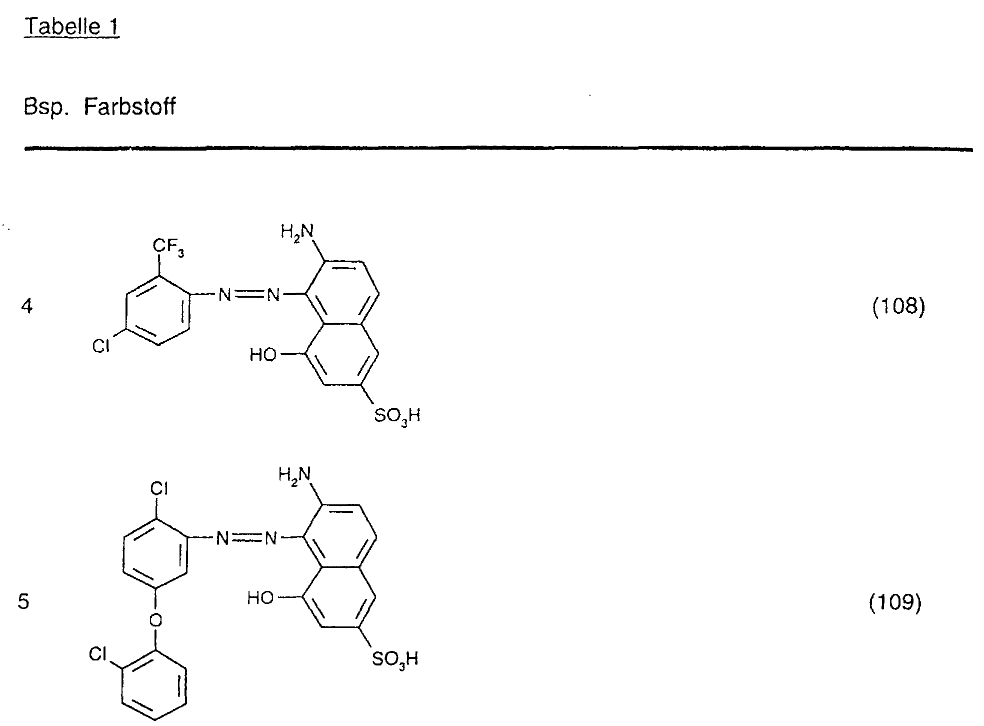

Beispiele 6 bis 9: Verfährt man wie in Beispiel 2 angegeben, verwendet jedoch anstelle von 0,1 Teilen des roffärbenden Farbstoffs der Formel (106) 0,1 Teile einer Farbstoffmischung aus 80 Teilen eines Farbstoffs, der in Form der freien Säure der Verbindung der Formel (108) entspricht und jeweils 20 Teile eines Farbstoffs, der in Form der freien Säure den Verbindungen der in Tabelle 2 angegebenen Formeln entspricht, so erhält man ebenfalls in einem beige-braunem Farbton gefärbtes Polyamidgewebe.

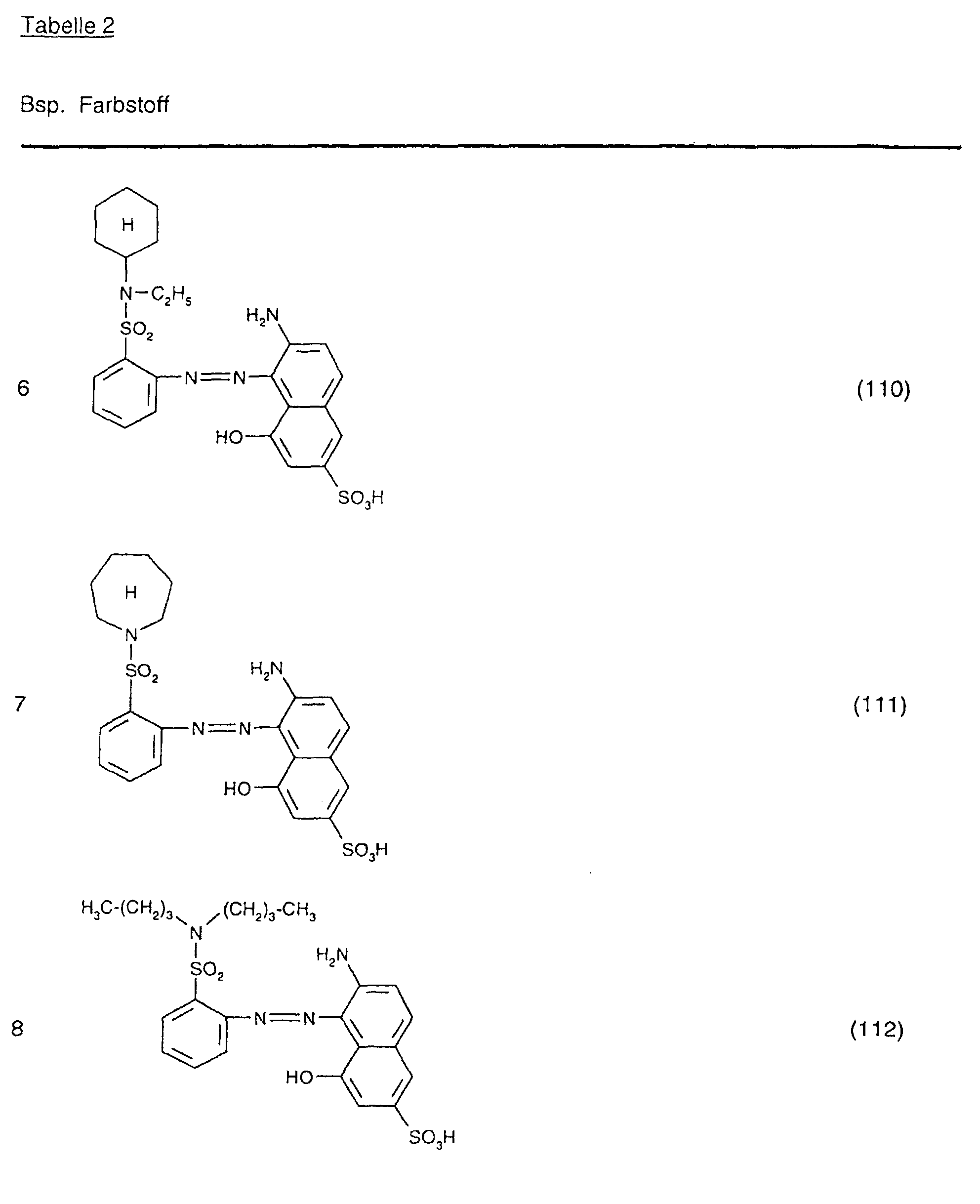

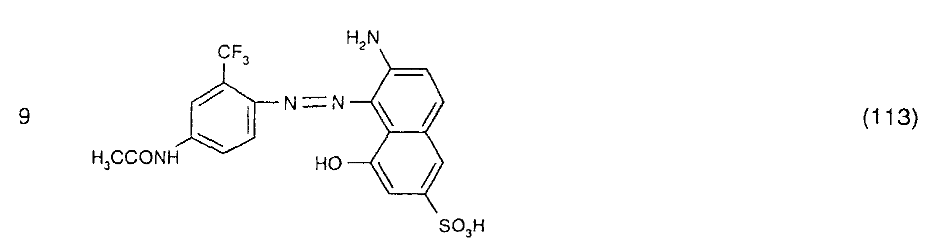

Beispiele 10 und 11: Verfährt man wie in Beispiel 2 angegeben, verwendet jedoch anstelle der gelbfärbenden Farbstoffe der Formeln (104) und (105) jeweils einen Farbstoff, der in Form der freien Säure den Verbindungen der in Tabelle 3 angegebenen Formeln entspricht, so erhält man ebenfalls in einem beige-braunem Farbton gefärbtes Polyamidgewebe. Jeder der in der folgenden Tabelle 3 angegebenen Farbstoffe wird in einer Menge von 0,22 Teilen, bezogen auf das zu färbende Fasermaterial, eingesetzt.

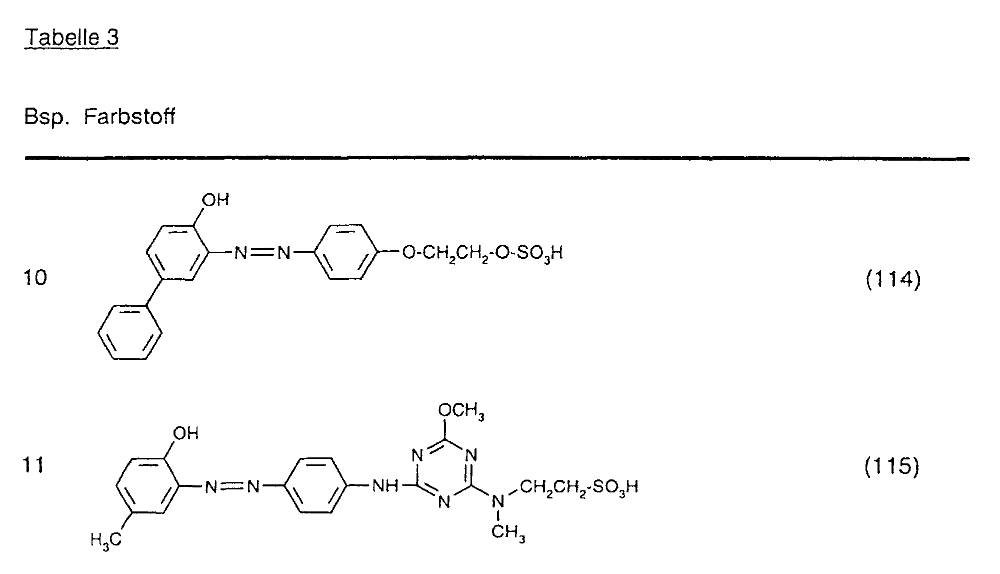

Herstellungsbeispiel: In einem Sulfierkolben werden 880 Teile Wasser vorgelegt und es werden 382 Teile 1-Amino-4-brom-anthrachinon-2-sulfonsäure, 82 Teile 3-Propionamidoanilin und 75 Teile 3-Acetamido-anilin eingetragen. Nach Zugabe von 201 Teilen Natriumhydrogencarbonat wird auf eine Temperatur von 75°C erwärmt. Unter ständigem Rühren werden dann 1 Teil Kupfer und 1 Teil Kupferchlorid zugegeben. Nach ca. 6 Stunden ist die Reaktion beendet. Man gibt 2180 Teile Wasser sowie 345 Teile 32%ige HCI zu. Man rührt noch 30 Minuten bei 80°C und das erhaltene Produkt wird über eine Nutsche abgesaugt und mit einer warmen Lösung von 25 Teilen HCI in 800 Teilen Wasser nachgewaschen. Man erhält 780 Teile eines noch feuchten Produktes, welches die Farbstoffe der Formeln (101) und (103) in einem Gewichtsverhältnis von 50:50 enthält.

Beispiel 12: Zur Herstellung einer konzentrierten wässrigen Lösung von Farbstoffen der Formeln (101) und (103) werden 28,5 Teile des im Herstellungsbeispiel erhaltenen feuchten Produkts in 31,1 Teilen entmineralisiertem Wasser angeschlämmt. Diese Paste wird dann mit 10,1 Teilen Triethanolamin bei einem pH-Wert von 7 bis 7,2 neutralisiert. Anschliessend werden 30,0 Teile ε-Caprolactam und 0,3 Teile eines handelsüblichen Bakterizids zugesetzt und die Farbstofflösung wird klärfiltriert. Die Zusammensetzung dieser flüssigen Formulierung ist wie folgt:
34,8 Gew.-% einer Mischung der Farbstoffe der Formeln (101) und (103) als Salze des Triethanolamins, wobei das Gewichtsverhältnis der Farbstoffe wie oben angegeben ist,
30,0 Gew.-% ε-Caprolactam,
0,3 Gew.-% eines handelsüblichen Bakterizids und
34,9 Gew.-% Wasser.

Die erhaltene Formulierung ist bei einer Temperatur von -5 bis +40°C lagerstabil und färbt Polyamidgewebe in blauen Farbtönen.

Beispiel 13: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Ethylenoxid) gegeben. Anschliessend wird das Bad mit 4 Teilen Natriumdihydrogenphosphat und 0,6 Teilen Dinatriumhydrogenphosphat auf einen pH-Wert von 6 gestellt. Dann gibt man eine Mischung von
0,11 Teilen eines Farbstoffs, der in Form der freien Säure der Verbindung der Formel (104) entspricht,
0,11 Teilen eines Farbstoffs, der in Form der freien Säure der Verbindung der Formel (105) entspricht,
0,1 Teilen eines Farbstoffs, der in Form der freien Säure der Verbindung der Formel 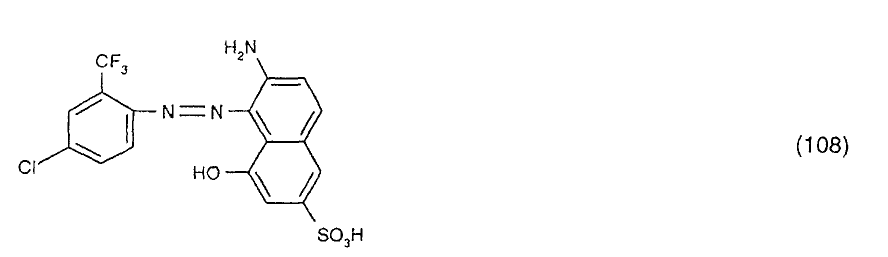 entspricht, und
0,11 Teile der Farbstoffmischung A aus Beispiel 1 zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur
45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

Beispiel 14: Verfährt man wie in Beispiel 13 angegeben, verwendet jedoch anstelle von 0,11 Teilen der Farbstoffmischung A aus Beispiel 1 0,11 Teile der Farbstoffmischung B aus Beispiel 1, so erhält man ebenfalls in einem beige-braunem Farbton gefärbtes Polyamidgewebe.

### Färbevorschrift I

Man färbt 10 Teile Polyamid-6,6-Gewebe in 500 Teilen einer wässrigen Flotte, die 2 g/l Ammoniumacetat enthält und mit Essigsäure auf pH 5 gestellt wird. Der Anteil der flüssigen Formulierung gemäss Beispiel 12 beträgt 2%, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil der flüssigen Formulierung gemäss Beispiel 12 beträgt 2%, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift III

Man färbt 10 Teile Wollstück in 500 Teilen einer wässrigen Flotte. Bezogen auf das Fasergewicht enthält die Flotte 2% der flüssigen Formulierung gemäss Beispiel 12, 5% Glaubersalz kalz. und 2% 80%-iger Essigsäure. Die Färbedauer bei einer Temperatur von 98°C beträgt 30-60 Minuten.

## Patentansprüche

1. Farbstoffmischungen, **dadurch gekennzeichnet, dass** sie mindestens einen Farbstoff der Formel (1) 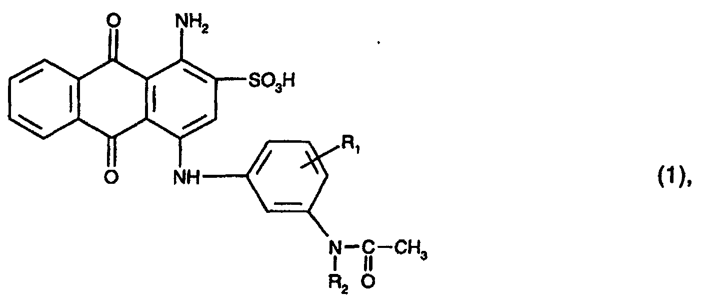 worin
R₁ Wasserstoff, C₁-C₄-Alkyl oder C₁-C₄-Alkoxy und R₂ Wasserstoff oder C₁-C₄-Alkyl ist, zusammen mit mindestens einem Farbstoff der Formel (2) 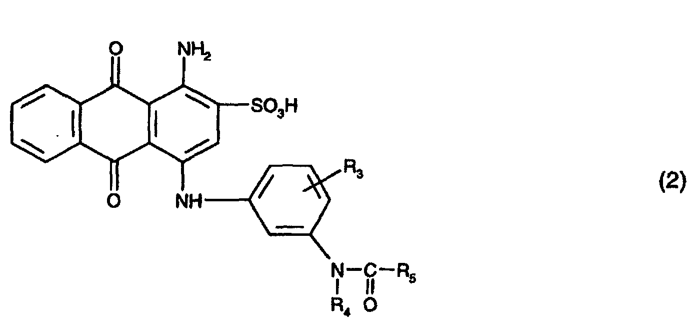 enthalten, worin
R₃ Wasserstoff, C₁-C₄-Alkyl oder C₁-C₄-Alkoxy bedeutet, R₄ Wasserstoff und R₅ gegebenenfalls durch Sauerstoff unterbrochenes C₂-C₆-Alkyl ist, mit der Massgabe, dass R₁ nicht Methyl bedeutet, falls R₂, und R₃ Wasserstoff sind und R₅ Ethyl ist.

2. Farbstoffmischungen gemäss Anspruch 1, **dadurch gekennzeichnet, dass** R₁ und R₃ unabhängig voneinander Wasserstoff, Methyl oder Methoxy sind, R₂ Wasserstoff bedeutet und R₅ C₂-C₄-Alkyl ist.

3. Farbstoffmischungen gemäss einem der Ansprüche 1 und 2, **dadurch gekennzeichnet, dass** R₁, R₂, und R₃ Wasserstoff sind und R₅ Ethyl bedeutet.

4. Farbstoffmischungen gemäss einem der Ansprüche 1 bis 3, **dadurch gekennzeichnet, dass** sie 5 bis 95 Gew.% und insbesondere 20 bis 80 Gew.% eines Farbstoffs der Formel (1), bezogen auf die Gesamtmenge der Farbstoffe der Formeln (1) und (2), enthalten.

5. Verfahren zum Färben oder Bedrucken von natürlichen oder synthetischen Polyamid-fasermaterialien, **dadurch gekennzeichnet, dass** man eine Farbstoffmischung gemäss einem der Ansprüche 1 bis 4 verwendet.

6. Verfahren gemäss Anspruch 5, **dadurch gekennzeichnet, dass** man eine Farbstoffmischung gemäss einem der Ansprüche 1 bis 4 zusammen mit anderen Farbstoffen verwendet.

7. Verfahren gemäss Anspruch 6 zum Trichromie-Färben oder -Bedrucken, **dadurch gekennzeichnet, dass** man eine Farbstoffmischung gemäss einem der Ansprüche 1 bis 4 zusammen mit mindestens einem rotfärbenden Farbstoff und mindestens einem gelb- oder orangefärbenden Farbstoff verwendet.

8. Verfahren gemäss Anspruch 7, **dadurch gekennzeichnet, dass** man als rotfärbenden Farbstoff mindestens einen Farbstoff der Formel (3) 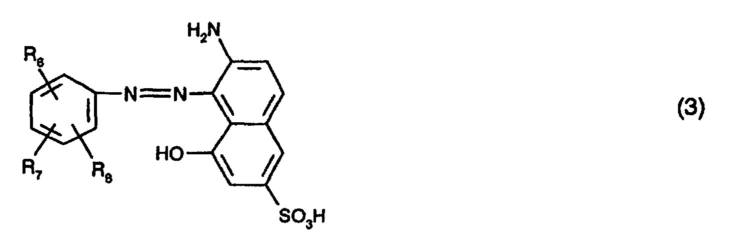 verwendet, worin
R₆ Wasserstoff, Halogen, gegebenenfalls substituiertes C₁-C₈-Alkyl, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylamino, gegebenenfalls im Phenylring durch Halogen substituiertes Benzoylamino oder 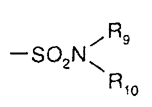 bedeutet, wobei R₉ C₁-C₈-Alkyl oder gegebenenfalls durch C₁-C₄-Alkyl substituiertes Phenyl oder Cyclohexyl und R₁₀ Wasserstoff oder C₁-C₈-Alkyl ist, oder die Reste R₉ und R₁₀ zusammen mit dem sie verbindenden Stickstoffatom einen Azepinylring bilden, R₇ Wasserstoff, Halogen, C₁-C₈-Alkyl oder C₂-C₄-Alkanoylamino und R₈ Wasserstoff, Halogen oder gegebenenfalls substituiertes Phenoxy bedeutet.

9. Verfahren gemäss Anspruch 8, **dadurch gekennzeichnet, dass** R₆ Halogen, gegebenenfalls durch Halogen substituiertes C₁-C₄-Alkyl oder 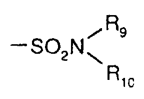 bedeutet, wobei R₉ C₁-C₄-Alkyl, Phenyl oder Cyclohexyl und R₁₀ Wasserstoff oder C₁-C₄-Alkyl ist, oder die Reste R₉ und R₁₀ zusammen mit dem sie verbindenden Stickstoffatom einen Azepinylring bilden, R₇ Wasserstoff, Halogen oder C₂-C₄-Alkanoylamino und R₈ Wasserstoff, Halogen oder gegebenenfalls im Phenylring durch Halogen, C₁-C₄-Alkyl, C₁-C₄-Alkoxy oder C₂-C₄-Alkanoyiamino substituiertes Phenoxy bedeutet.

10. Verfahren gemäss einem der Ansprüche 8 und 9, **dadurch gekennzeichnet, dass** R₆ Halogen, Trifluormethyl oder 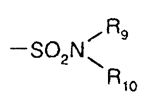 bedeutet, wobei R₉ Cyclohexyl und R₁₀ Methyl oder Ethyl ist, oder die Reste R₉ und R₁₀ zusammen mit dem sie verbindenden Stickstoffatom einen Azepinylring bilden, R₇ Wasserstoff oder Halogen und R₈ Wasserstoff oder gegebenenfalls im Phenylring durch Halogen substituiertes Phenoxy bedeutet.

11. Verfahren gemäss einem der Ansprüche 8 bis 10, **dadurch gekennzeichnet, dass** man als rotfärbenden Farbstoff der Formel (3) einen Farbstoff der Formel (4) 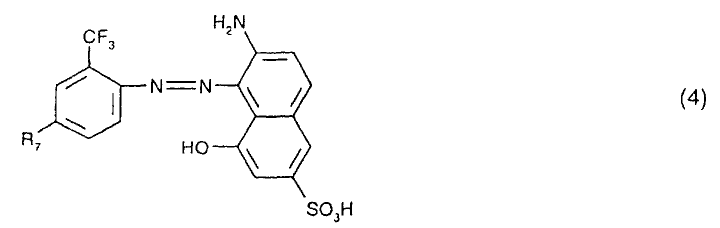 verwendet, worin
R₇ Wasserstoff oder Halogen ist.

12. Verfahren gemäss Anspruch 7, **dadurch gekennzeichnet, dass** man als gelb- oder orangefärbenden Farbstoff mindestens einen Farbstoff der Formeln (5) oder (6) 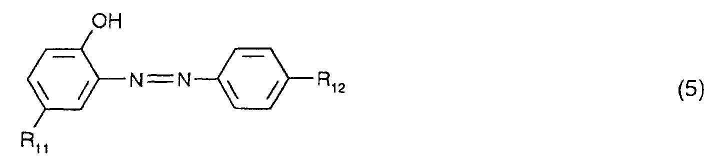 oder 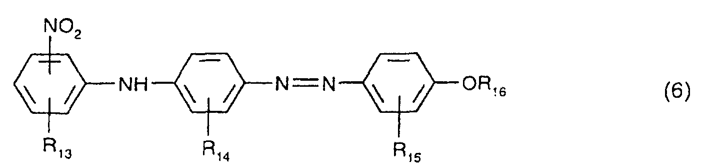 verwendet, worin
R₁₁ Wasserstoff, C₁-C₄-Alkyl oder gegebenenfalls substituiertes Phenyl und R₁₂ gegebenenfalls im Alkylteil substituiertes C₁-C₄-Alkoxy oder einen 4,6-disubstituierten N-(1,3,5-triazin-2-yl)amino- oder N-C₁-C₄-Alkyl-N-(1,3,5-triazin-2-yl)aminorest bedeutet, R₁₃, R₁₄ und R₁₅ unabhängig voneinander Wasserstoff, C₁-C₄-Alkyl, C₁-C₄-Alkoxy, C₂-C₄-Alkanoylamino, Halogen oder Sulfo bedeuten, und R₁₆ Wasserstoff, C₁-C₄-Alkyl oder gegebenenfalls im Phenylring substituiertes Phenylsulfonyl ist.

13. Verfahren gemäss Anspruch 12, **dadurch gekennzeichnet, dass** R₁₁ Wasserstoff, C₁-C₄-Alkyl oder gegebenenfalls durch C₁-C₄-Alkyl, C₁-C₄-Alkoxy oder Halogen substituiertes Phenyl ist,
R₁₂ gegebenfalls im Alkylteil durch Hydroxy oder Sulfato substituiertes C₁-C₄-Alkoxy oder einen Rest der Formel 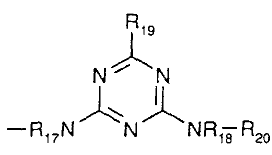 bedeutet, wobei R₁₇ und R₁₈ unabhängig voneinander Wasserstoff oder C₁-C₄-Alkyl sind, R₁₉ C₁-C₄-Alkoxy, Hydroxy, Halogen, Amino, N-Mono- oder N,N-Di-C₁-C₄-Alkylamino und R₂₀ gegebenenfalls durch Hydroxy, C₁-C₄-Alkoxy, C₂-C₄-Alkanoylamino, Carboxy oder Sulfo substituiertes C₁-C₄-Alkyl oder gegebenenfalls durch Halogen, C₁-C₄-Alkyl, C₁-C₄-Alkoxy, C₂-C₄-Alkanoylamino oder Sulfo substituiertes Phenyl bedeutet; R₁₃ und R₁₄ unabhängig voneinander Wasserstoff oder Sulfo bedeuten, R₁₅ Wasserstoff, C₁-C₄-Alkyl oder C₁-C₄-Alkoxy und R₁₆ Wasserstoff oder C₁-C₄-Alkyl ist.

14. Verfahren gemäss einem der Ansprüche 12 und 13, **dadurch gekennzeichnet, dass** man als gelb- oder orangefärbenden Farbstoff mindestens einen Farbstoff der Formel (5) verwendet, worin R₁₁ Wasserstoff, C₁-C₄-Alkyl oder Phenyl ist, R₁₂ im Alkylteil durch Sulfato substituiertes C₁-C₄-Alkoxy, insbesondere 2-Sulfatoethoxy, oder einen Rest der Formel 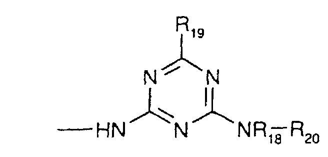 bedeutet, wobei R₁₈ C₁-C₄-Alkyl, insbesondere Methyl,
R₁₉ C₁-C₄-Alkoxy, insbesondere Methoxy und R₂₀ durch Sulfo substituiertes C₁-C₄-Alkyl, insbesondere 2-Sulfoethyl sind.

15. Verfahren gemäss einem der Ansprüche 12 und 13, **dadurch gekennzeichnet, dass** man als gelb- oder orangefärbenden Farbstoff der Formel (6) mindestens einen Farbstoff der Formeln (7) und (8) 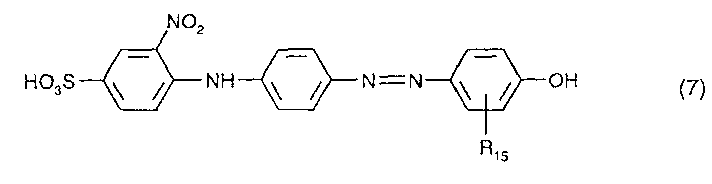 und 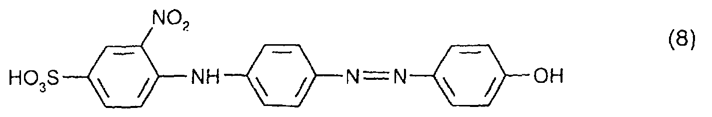 verwendet, worin
R₁₅ C₁-C₄-Alkyl ist.

16. Verfahren gemäss einem der Ansprüche 5 bis 15, **dadurch gekennzeichnet, dass** man Wolle oder synthetisches Polyamidfasermaterial färbt oder bedruckt.

17. Verfahren gemäss Anspruch 16, **dadurch gekennzeichnet, dass** man synthetisches Polyamidfasermaterial färbt oder bedruckt.

18. Verwendung der Farbstoffmischungen gemäss Anspruch 1 zum Färben oder Bedrucken von Wolle oder synthetischem Polyamidfasermaterial.

19. Konzentrierte, wässrige Farbstofflösungen, **dadurch gekennzeichnet, dass** sie 5 bis 50 Gew.-%, bezogen auf das Gesamtgewicht der Farbstofflösung, einer Farbstoffmischung gemäss einem der Ansprüche 1 bis 4 enthalten.

## Claims

1. A dye mixture comprising at least one dye of formula (1) 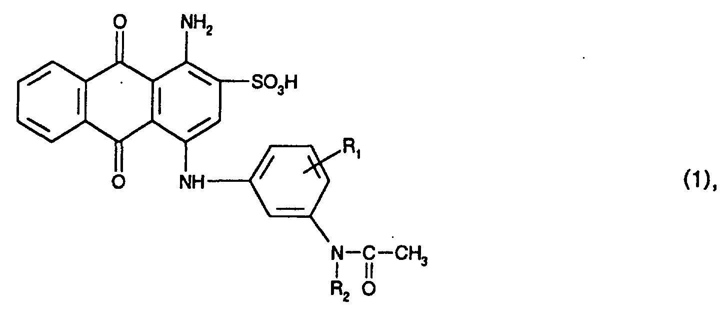 wherein
R₁ is hydrogen, C₁-C₄alkyl or C₁-C₄alkoxy and R₂ is hydrogen or C₁-C₄alkyl, together with at least one dye of formula (2) 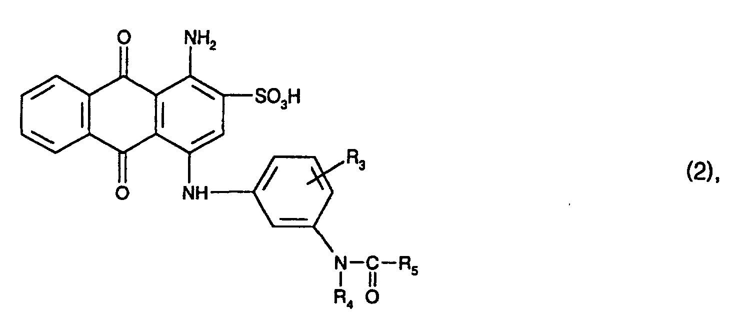 wherein
R₃ is hydrogen, C₁-C₄alkyl or C₁-C₄alkoxy, R₄ is hydrogen and R₅ is C₂-C₆alkyl uninterrupted or interrupted by oxygen, with the proviso that R₁ is not methyl when R₂ and R₃ are hydrogen and R₅ is ethyl.

2. A dye mixture according to claim 1, in which R₁ and R₃ are each independently of the other hydrogen, methyl or methoxy, R₂ is hydrogen and R₅ is C₂-C₄alkyl.

3. A dye mixture according to either claim 1 or claim 2, in which R₁, R₂ and R₃ are hydrogen and R₅ is ethyl.

4. A dye mixture according to any one of claims 1 to 3 comprising from 5 to 95 % by weight and especially from 20 to 80 % by weight of a dye of formula (1), based on the total amount of the dyes of formulae (1) and (2).

5. A method for dyeing or printing natural or synthetic polyamide fibre materials which comprises using a dye mixture according to any one of claims 1 to 4.

6. A method according to claim 5 which comprises using a dye mixture according to any one of claims 1 to 4 together with other dyes.

7. A method according to claim 6 for trichromatic dyeing or printing, which comprises using a dye mixture according to any one of claims 1 to 4 together with at least one red dye and at least one yellow or orange dye.

8. A method according to claim 7, which comprises using as red dye at least one dye of formula (3) 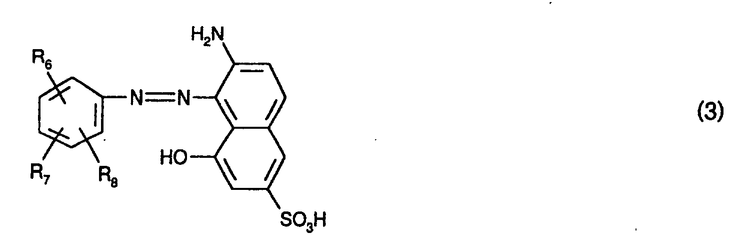 wherein
R₆ is hydrogen; halogen; unsubstituted or substituted C₁-C₈alkyl; phenylsulfonyl or phenoxysulfonyl each unsubstituted or substituted in the phenyl ring by C₁-C₄alkyl; cyclohexyloxycarbonylamino; C₂-C₄alkanoylamino; benzoylamino unsubstituted or halo-substituted in the phenyl ring; or 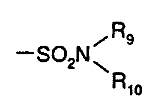 wherein R₉ is C₁-C₈alkyl, or phenyl or cyclohexyl each unsubstituted or substituted by C₁-C₄alkyl, and R₁₀ is hydrogen or C₁-C₈alkyl, or the radicals R₉ and R₁₀ together with the nitrogen atom bonding them form an azepinyl ring, R₇ is hydrogen, halogen, C₁-C₈alkyl or C₂-C₄alkanoylamino and R₈ is hydrogen, halogen or unsubstituted or substituted phenoxy.

9. A method according to claim 8, in which R₆ is halogen, unsubstituted or halo-substituted C₁-C₄alkyl or 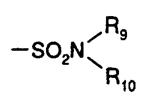 wherein R₉ is C₁-C₄alkyl, phenyl or cyclohexyl and R₁₀ is hydrogen or C₁-C₄alkyl, or the radicals R₉ and R₁₀ together with the nitrogen atom bonding them form an azepinyl ring, R₇ is hydrogen, halogen or C₂-C₄alkanoylamino and R₈ is hydrogen, halogen or phenoxy unsubstituted or substituted in the phenyl ring by halogen, C₁-C₄alkyl, C₁-C₄alkoxy or by C₂-C₄alkanoylamino.

10. A method according to either claim 8 or claim 9, in which R₆ is halogen, trifluoromethyl or 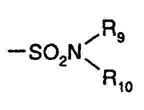 wherein R₉ is cyclohexyl and R₁₀ is methyl or ethyl, or the radicals R₉ and R₁₀ together with the nitrogen atom bonding them form an azepinyl ring, R₇ is hydrogen or halogen and R₈ is hydrogen or phenoxy unsubstituted or halo-substituted in the phenyl ring.

11. A method according to any one of claims 8 to 10 which comprises using as red dye of formula (3) a dye of formula (4) 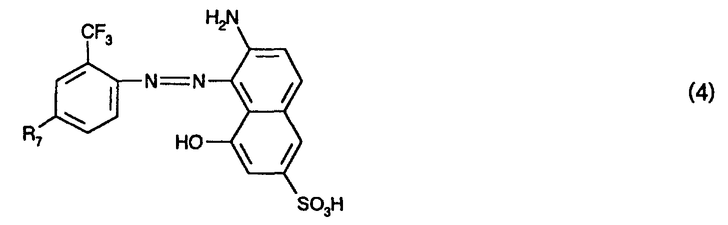 wherein
R₇ is hydrogen or halogen.

12. A method according to claim 7 which comprises using as yellow or orange dye at least one dye of formula (5) or (6) 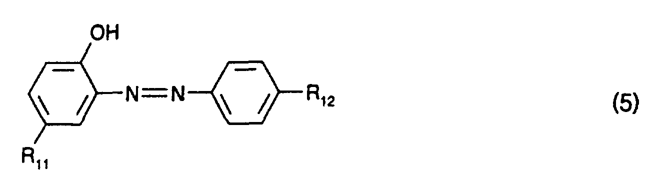 or 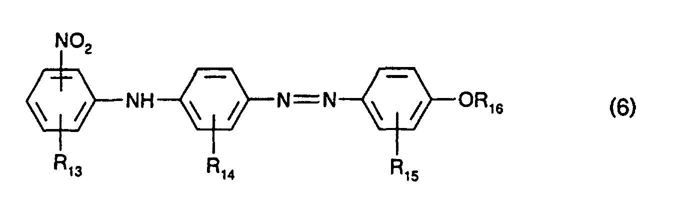 wherein
R₁₁ is hydrogen, C₁-C₄alkyl or unsubstituted or substituted phenyl, and R₁₂ is C₁-C₄alkoxy unsubstituted or substituted in the alkyl moiety or is a 4,6-disubstituted N-(1,3,5-triazin-2-yl)amino or N-C₁-C₄alkyl-N-(1,3,5-triazin-2-yl)amino radical, R₁₃, R₁₄ and R₁₅ are each independently of the others hydrogen, C₁-C₄alkyl, C₁-C₄alkoxy, C₂-C₄alkanoylamino, halogen or sulfo, and R₁₆ is hydrogen, C₁-C₄alkyl or phenylsulfonyl unsubstituted or substituted in the phenyl ring.

13. A method according to claim 12, in which R₁₁ is hydrogen, C₁-C₄alkyl or phenyl unsubstituted or substituted by C₁-C₄alkyl, C₁-C₄alkoxy or by halogen,
R₁₂ is C₁-C₄alkoxy unsubstituted or substituted in the alkyl moiety by hydroxy or by sulfato or is a radical of formula 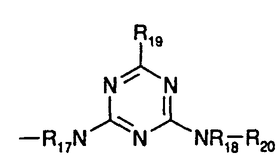 wherein R₁₇ and R₁₈ are each independently of the other hydrogen or C₁-C₄alkyl, R₁₉ is C₁-C₄alkoxy, hydroxy, halogen, amino or N-mono- or N,N-di-C₁-C₄alkylamino and R₂₀ is C₁-C₄alkyl unsubstituted or substituted by hydroxy, C₁-C₄alkoxy, C₂-C₄alkanoylamino, carboxy or by sulfo or is phenyl unsubstituted or substituted by halogen, C₁-C₄alkyl, C₁-C₄alkoxy, C₂-C₄alkanoylamino or by sulfo; R₁₃ and R₁₄ are each independently of the other hydrogen or sulfo, R₁₅ is hydrogen, C₁-C₄alkyl or C₁-C₄alkoxy and R₁₆ is hydrogen or C₁-C₄alkyl.

14. A method according to either claim 12 or claim 13 which comprises using as yellow or orange dye at least one dye of formula (5) wherein R₁₁ is hydrogen, C₁-C₄alkyl or phenyl, R₁₂ is C₁-C₄alkoxy substituted in the alkyl moiety by sulfato, especially 2-sulfatoethoxy, or a radical of formula 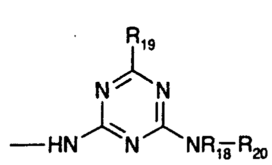 wherein R₁₈ is C₁-C₄alkyl, especially methyl, R₁₉ is C₁-C₄alkoxy, especially methoxy, and R₂₀ is sulfo-substituted C₁-C₄alkyl, especially 2-sulfoethyl.

15. A method according to either claim 12 or claim 13 which comprises using as yellow or orange dye of formula (6) at least one dye of formulae (7) and (8) 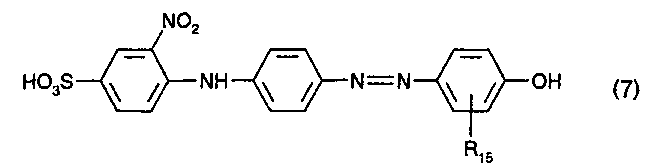 and 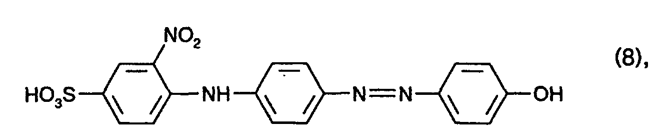 wherein
R₁₅ is C₁-C₄alkyl.

16. A method according to any one of claims 5 to 15, which comprises dyeing or printing wool or synthetic polyamide fibre material.

17. A method according to claim 16, which comprises dyeing or printing synthetic polyamide fibre material.

18. Use of a dye mixture according to claim 1 for dyeing or printing wool or synthetic polyamide fibre material.

19. A concentrated aqueous dye solution comprising from 5 to 50 % by weight, based on the total weight of the dye solution, of a dye mixture according to any one of claims 1 to 4.

## Revendications

1. Mélanges de colorants, **caractérisés en ce qu'**ils contiennent au moins un colorant de formule (1) 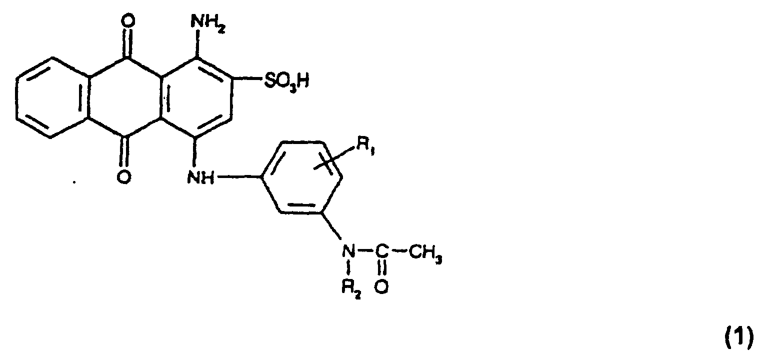 où
R₁ représente un atome d'hydrogène, des groupes alkyle en C₁-C₄ ou alkoxy en C₁-C₄,
R₂ représente un atome d'hydrogène ou un groupe alkyle en C₁-C₄,
conjointement avec au moins un colorant de formule (2) où 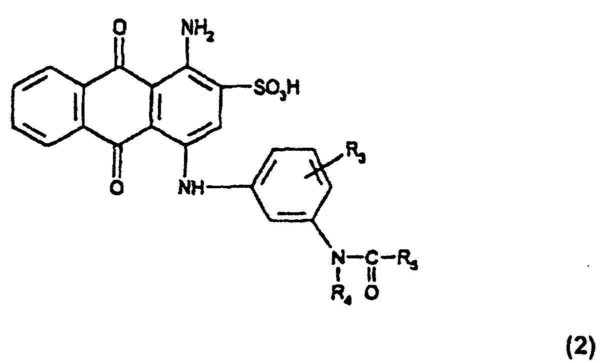
R₃ représente un atome d'hydrogène, des groupes alkyle en C₁-C₄ ou alkoxy en C₁-C₄ et
R₄ représente un atome d'hydrogène et
R₅ représente un groupe alkyle en C₂-C₆ éventuellement interrompu par des atomes d'oxygène,
à condition que R₁ ne représente pas un groupe méthyle, dans le cas où R₂ et R₃ représentent un atome d'hydrogène et R₅ représente un groupe éthyle.

2. Mélanges de colorants selon la revendication 1, **caractérisés en ce que** R₁ et R₃ représentent, indépendamment l'un de l'autre, un atome d'hydrogène, un groupe méthyle ou méthoxy, R₂ représente un atome d'hydrogène et R₅ représente un groupe alkyle en C₂-C₄.

3. Mélanges de colorants selon l'une des revendications 1 et 2, **caractérisés en ce que** R₁, R₂ et R₃ représentent un atome d'hydrogène et R₅ représente un groupe éthyle.

4. Mélanges de colorants selon l'une des revendications 1 à 3, **caractérisés en ce qu'**ils présentent une teneur de 5 à 95 % en poids et en particulier de 20 à 80 % en poids en un colorant de formule (1) par rapport à la quantité totale des colorants de formules (1) et (2).

5. Procédé pour la teinture ou l'impression de matières fibreuses polyamides naturelles ou synthétiques, **caractérisé en ce qu'**on utilise un mélange de colorants selon l'une des revendications 1 à 4.

6. Procédé selon la revendication 5, **caractérisé en ce qu'**on utilise un mélange de colorants selon l'une des revendications 1 à 4 conjointement avec d'autres colorants.

7. Procédé selon la revendication 6 pour la teinture ou l'impression en trois couleurs, **caractérisé en ce qu'**on utilise un mélange de colorants selon l'une des revendications 1 à 4 conjointement avec au moins un colorant qui teint en rouge et au moins un colorant qui teint en jaune ou en orange.

8. Procédé selon la revendication 7, **caractérisé en ce qu'**on utilise en tant que colorant qui teint en rouge au moins un colorant de formule (3) 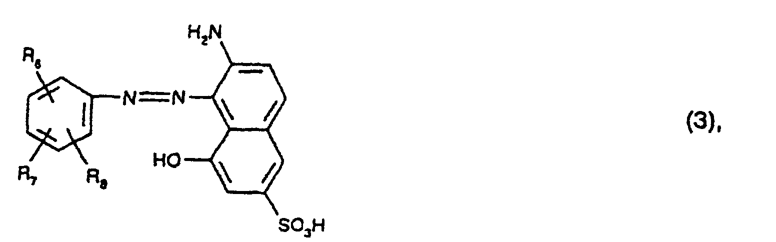 où
R₆ représente un atome d'hydrogène, un atome d'halogène, un groupe alkyle en C₁-C₈ éventuellement substitué, un groupe phénylsulfonyle ou phénoxysulfonyle éventuellement substitué dans le cycle phényle par un substituant alkyle en C₁-C₄, cyclohexyloxycarbonylamino, (alcanoyl en C₂-C₄)amino, benzoylamino éventuellement substitué dans le cycle phényle par un substituant halogène ou un groupe 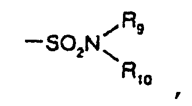 où R₉ représente un groupe alkyle en C₁-C₈ ou un groupe cyclohexyle ou phényle éventuellement substitué par un substituant alkyle en C₁-C₄ et R₁₀ représente un atome d'hydrogène ou un groupe alkyle en C₁-C₈, ou les restes R₉ et R₁₀ forment conjointement avec l'atome d'azote qui les relie un cycle azépinyle,
R₇ représente un atome d'hydrogène, un atome d'halogène, un groupe alkyle en C₁-C₈ ou (alcanoyl en C₂-C₄)amino et
R₈ représente un atome d'hydrogène, un atome d'halogène ou un groupe phénoxy éventuellement substitué.

9. Procédé selon la revendication 8, **caractérisé en ce que** R₆ représente un atome d'halogène, un groupe alkyle en C₁-C₄ éventuellement substitué par un substituant halogène ou 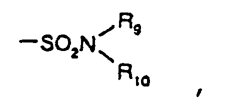 où R₉ représente un groupe alkyle en C₁-C₄, un groupe phényle ou cyclohexyle et R₁₀ représente un atome d'hydrogène ou un groupe alkyle en C₁-C₄ ou les restes R₉ et R₁₀ forment conjointement avec l'atome d'azote qui les relie un cycle azépinyle, R₇ représente un atome d'hydrogène, un atome d'halogène ou un groupe (alcanoyl en C₂-C₄)amino et R₈ représente un atome d'hydrogène, un atome d'halogène ou un groupe phénoxy éventuellement substitué dans le cycle phényle par des substituants halogène, alkyle en C₁-C₄, alkoxy en C₁-C₄ ou (alcanoyl en C₂-C₄)amino.

10. Procédé selon l'une des revendications 8 et 9, **caractérisé en ce** R₆ représente un atome d'halogène, un groupe trifluorométhyle ou un groupe 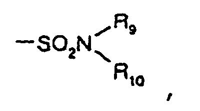 où R₉ représente un groupe cyclohexyle et R₁₀ représente un groupe méthyle ou éthyle, ou les restes R₉ et R₁₀ forment conjointement avec l'atome d'azote qui les relie, un cycle azépinyle, R₇ représente un atome d'hydrogène ou un atome d'halogène et R₈ représente un atome d'hydrogène ou un groupe phénoxy éventuellement substitué dans le cycle phényle par un substituant halogène.

11. Procédé selon l'une des revendications 8 à 10, **caractérisé en ce qu'**on utilise en tant que colorant qui teint en rouge de formule (3) un colorant de formule (4) 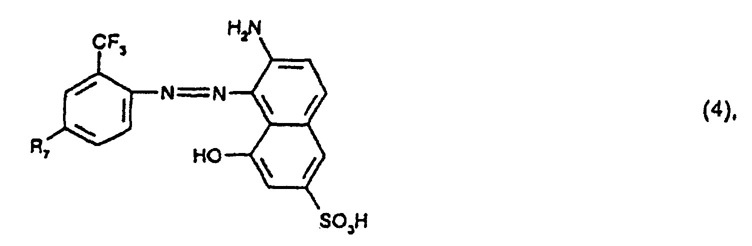 où
R₇ représente un atome d'hydrogène ou un atome d'halogène.

12. Procédé selon la revendication 7, **caractérisé en ce qu'**on utilise en tant que colorant qui teint en jaune ou en orange au moins un colorant de formules (5) ou (6) 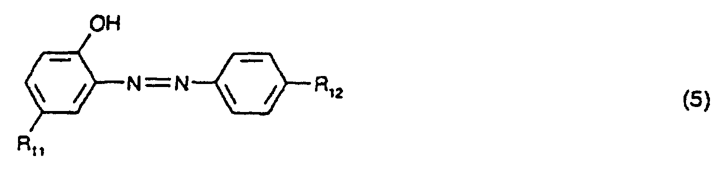 ou 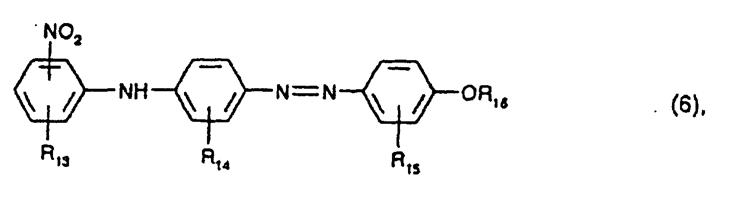 où
R₁₁ représente un atome d'hydrogène, un groupe alkyle en C₁-C₄ ou phényle éventuellement substitué et
R₁₂ représente un groupe alkoxy en C₁-C₄ éventuellement substitué dans le fragment alkyle ou un reste N-(1,3,5-triazin-2-yl)amino ou N-(alkyl en C₁-C₄)-N-(1,3,5-triazin-2-yl)amino disubstitué en positions 4,6,
R₁₃, R₁₄ et R₁₅ représentent, indépendamment les uns des autres, un atome d'hydrogène, des groupes alkyle en C₁-C₄, alkoxy en C₁-C₄, (alcanoyl en C₂-C₄)amino, halogène ou sulfo, et
R₁₆ représente un atome d'hydrogène, des groupes alkyle en C₁-C₄ ou phénylsulfonyle éventuellement substitué dans le cycle phényle.

13. Procédé selon la revendication 12, **caractérisé en ce que**
R₁₁ représente un atome d'hydrogène, un groupe alkyle en C₁-C₄ ou phényle éventuellement substitué par des substituants alkyle en C₁-C₄, alkoxy en C₁-C₄ ou halogène,
R₁₂ représente un groupe alkoxy en C₁-C₄ éventuellement substitué dans le fragment alkyle par des substituants hydroxy ou sulfato ou un reste de formule 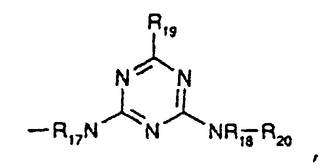 où R₁₇ et R₁₈ représentent, indépendamment l'un de l'autre, un atome d'hydrogène ou un groupe alkyle en C₁-C₄, R₁₉ représente des groupes alkoxy en C₁-C₄, hydroxy, halogène, amino, N-mono- ou N,N-di-(alkyl en C₁-C₄) amino et R₂₀ représente un groupe alkyle en C₁-C₄ éventuellement substitué par des substituants hydroxy, alkoxy en C₁-C₄, (alcanoyl en C₂-C₄) amino, carboxy ou sulfo, ou un groupe phényle éventuellement substitué par des substituants halogène, alkyle en C₁-C₄, alkoxy en C₁-C₄, (alcanoyl en C₂-C₄)amino ou sulfo ; R₁₃ et R₁₄ représentent, indépendamment l'un de l'autre, un atome d'hydrogène ou un groupe sulfo ; R₁₅ représente un atome d'hydrogène, un groupe alkyle en C₁-C₄ ou alkoxy en C₁-C₄, et R₁₆ représente un atome d'hydrogène ou un groupe alkyle en C₁-C₄.

14. Procédé selon l'une des revendications 12 et 13, **caractérisé en ce qu'**on utilise en tant que colorant qui teint en jaune ou en orange au moins un colorant de formule (5), où R₁₁ représente un atome d'hydrogène, un groupe alkyle en C₁-C₄ ou phényle, R₁₂ représente un groupe alkoxy en C₁-C₄ substitué dans le fragment alkyle par un substituant sulfato, notamment 2-sulfatoéthoxy ou un reste de formule 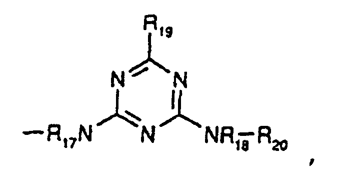 où R₁₈ représente un groupe alkyle en C₁-C₄, notamment méthyle, R₁₉ représente un groupe alkoxy en C₁-C₄, notamment méthoxy, et R₂₀ représente un groupe alkyle en C₁-C₄ substitué par un substituant sulfo, en particulier 2-sulfoéthyle.

15. Procédé selon l'une des revendications 12 et 13, **caractérisé en ce qu'**on utilise en tant que colorant de formule (6) qui teint en jaune ou en orange au moins un colorant de formule (7) et (8) 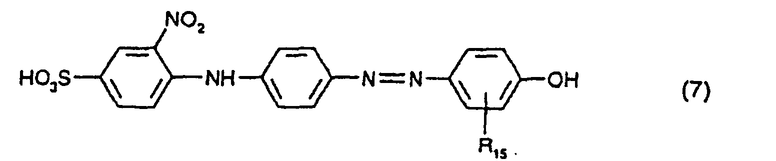 et 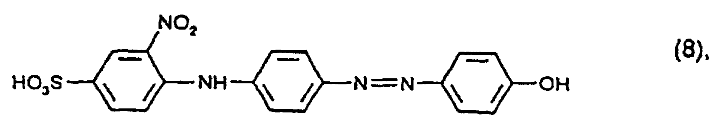 où
R₁₅ représente un groupe alkyle en C₁-C₄.

16. Procédé selon l'une des revendications 5 à 15, **caractérisé en ce qu'**on teint ou on imprime la laine ou une matière fibreuse polyamide synthétiques.

17. Procédé selon la revendication 16, **caractérisé en ce qu'**on teint ou on imprime une matière fibreuse polyamide synthétique.

18. Utilisation des mélanges de colorants selon la revendication 1 pour la teinture ou l'impression de laine ou d'une matière fibreuse polyamide synthétique.

19. Solutions de colorants aqueuses, concentrées, **caractérisées en ce qu'**elles présentent une teneur de 5 à 50 % en poids, par rapport au poids total de la solution de colorant, en un mélange de colorants selon l'une des revendications 1 à 4.
